# EUROPEAN PATENT APPLICATION

(11) **EP 1 378 181 A1**
(43) Date of publication of application: **07.01.2004**
(21) Application number: 03425433.4
(22) Date of filing: 01.07.2003
(51) Int. Cl.: A23N 15/00

(54) **Automatic machine for preparation artichokes**

(30) Priority: 01.07.2002 IT SA20020008 U
(71) Applicant: Ferrara s.n.c., 84014 Nocera Infriore (SA) (IT)
(72) Inventor: Ferrara, Gianluca, 84014 Nocera Inferiore (SA) (IT)

(57) **Abstract**

Object of the present invention is an automatic rotative type machine used by the alimentary preserves industries for the preparation of the artichokes to be packaging. The machine combines cutting and turning devices with a special unit, consisting of a perforated plate, bearing one or more moulded and calibrated rings (9) or (9b), possibly associated with opposing circular blades (14) that rotate in opposite directions, against the direction of the artichoke expulsion, as well as a visual control device connected to an unloading direction mechanism consisting of a mobile channel (15) directed by a pneumatic cylinder (16).

## Description

### Technical Field

Object of the present invention is an automatic rotative type machine used by the alimentary preserves industries for the preparation of the artichokes to be packaging. Machine able to operation of leaf removing and to cut to segments the artichokes as well as to select and to separate the same from the discards after the operation of cut and turning.

### State of the technique

To obtain particularly proper artichokes for the packaging, these have to be well polished up from the leathery leaves and calibrated in the form and in the dimensions; for which the first necessary element to a preparing in automatic it is the system of block of the artichokes. In the present car he makes use of a couple of jaws, that are closed pneumatically to hold back the artichoke and open through a mechanical system managed by a cam, as described in Italian application NA99A000006. The pneumatic action in closing allows to easily set the optimal pressure for the block of the product so that to conform himself to the dimensions and the consistence of the artichoke (cooked or raw) to shut for the following working; such system make so that the vice, in any position of block, preserves always the ideal center of working. The artichoke, therefore, shut in an optimal position, essentially vertical, it is object of a first operation of cut of the stem, therefore to one of turning. The operation of turning of the artichoke effects him with a rotating utensil around the longitudinal axle of the artichoke and endowed with two knives, one with blade in an position vertical action to determine the gauge (diameter of the artichoke) wanted, and the other with the blade that works according to an oblique direction in comparison to the horizontal plan of position of the utensil, necessary to determine the degree of conicity of the lower part of the artichoke. The oblique knife can have an angle of fixed inclination, or adjustable as in the Italian patent application SA2001A000023 in the name of the same applicant. From cliped artichokes with heart leaf removed and turned, are results the hearts of artichoke, the most greater part of which, before are packed must have submitted to an operation of:
- control of the quality to find possible defects;
- loaf removing and cleaning up to separate the hearts from the feathery foliage however been attached or hanging from the hearts themselves;
- possible operation of cut into segments;
- operation of separation of the fit product to packaging from that defective.

Such fast but essential operations to get well polished up and calibrated artichokes particularly proper to a perfect manifacture, burden on the cost of the ended product because are usually effected manually or with separate machines, therefore with times and superior costs surety, and not the necessary quality is reached always.

### Purposes and advantages of the invention

Purpose of the present invention is that to obviate to the drawbacks of the preceding technique with to set a machine that integrates in it all the necessary operations to get a heart of finished artichoke, well cut, clean and calibrated, optimal for the manifacture, particularly it is interest of the applicant to realize a machine that integrates, besides the notes operations of cut and turning, the operation of vision of the quality of the product, the leaf removing of artichokes worked without any prejudice around the quality of the finished product such not to recover neither hearts leaves disconnected intermix or hanging from the hearts themselves neither to realize removes of product superior to that necessary, the operation of cut into segments of the hearts of artichoke and the operation of separation of the fit product to packaging from that defective. Purpose of the present invention is to realize a machine that, besides the notes operations of cut and turning, entire a device that realizes the operations of final leaf removing and cut into segments of the hearts of artichokes. The assignments, the purposes and others that will be underlined subsequently better are reached by rotating machine for preparing artichokes for packaging characterized by the fact that it combines cutting and turning devices with a special unit, consisting of a perforated plate, bearing one or more moulded and calibrated rings, possibly associated with opposing circular blades that rotate in opposite directions, against the direction of the artichoke expulsion, as well as a visual control device connected to an unloading direction mechanism.

### Description of the drawings and way of realizing the invention.

These and other characteristics as well as advantages will result evident from the following description and from the enclosed drawings furnished to only indicative purpose and not limitative in which:
the fig. 1 shows in a schematic sight in plant all the various operations of cut, turning and leaf removing that are effected by the machine;

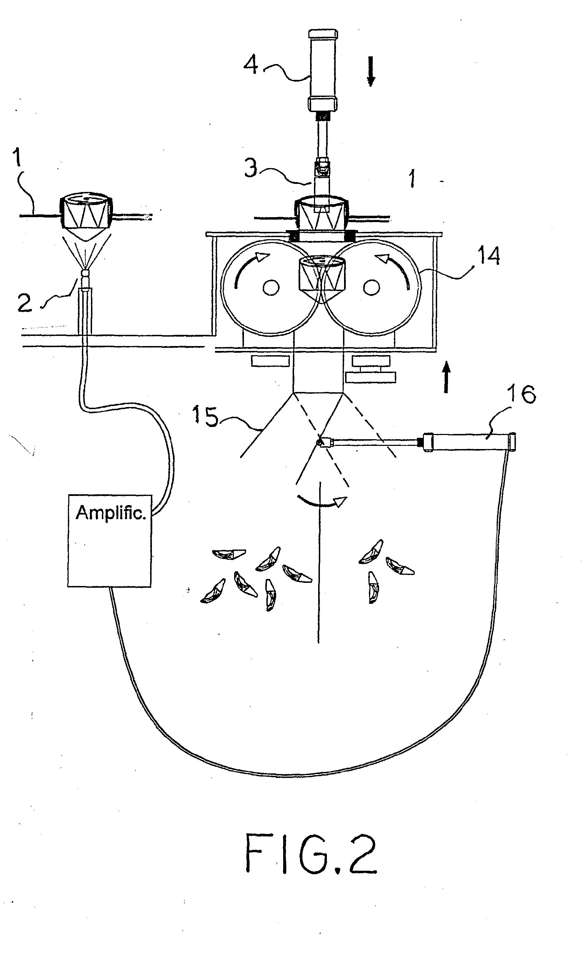

the fig. 2 shows in a schematic side sight the complex of vision, leaf removing and cut into segments as well as of selection of the artichokes, according to a first realization preferred of the present invention;

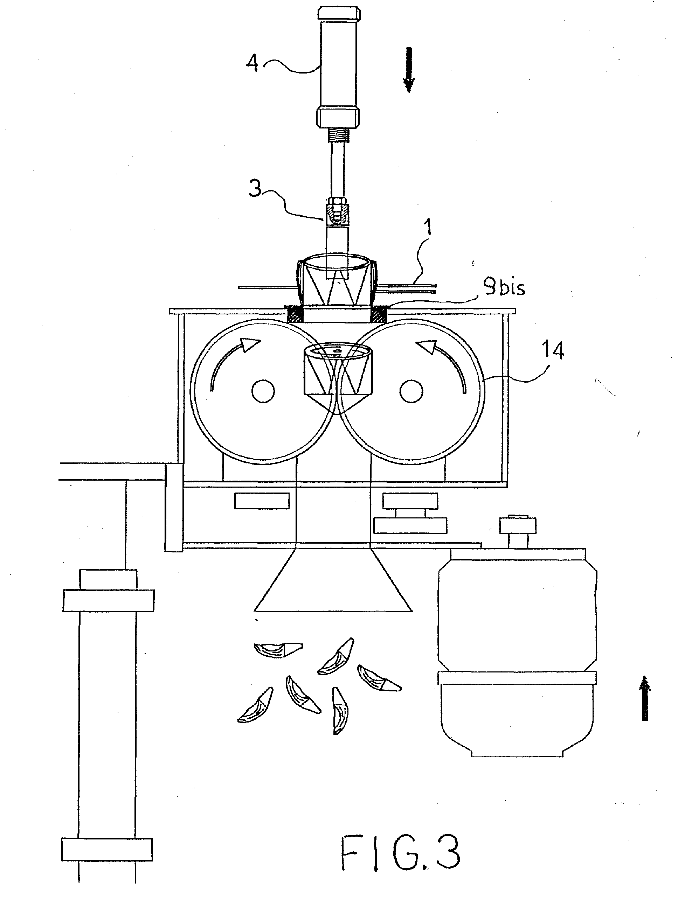

The fig.3 shows in a schematic side sight a different realization in which the system of vision and selection is lacking to the unload some cut artichokes ;

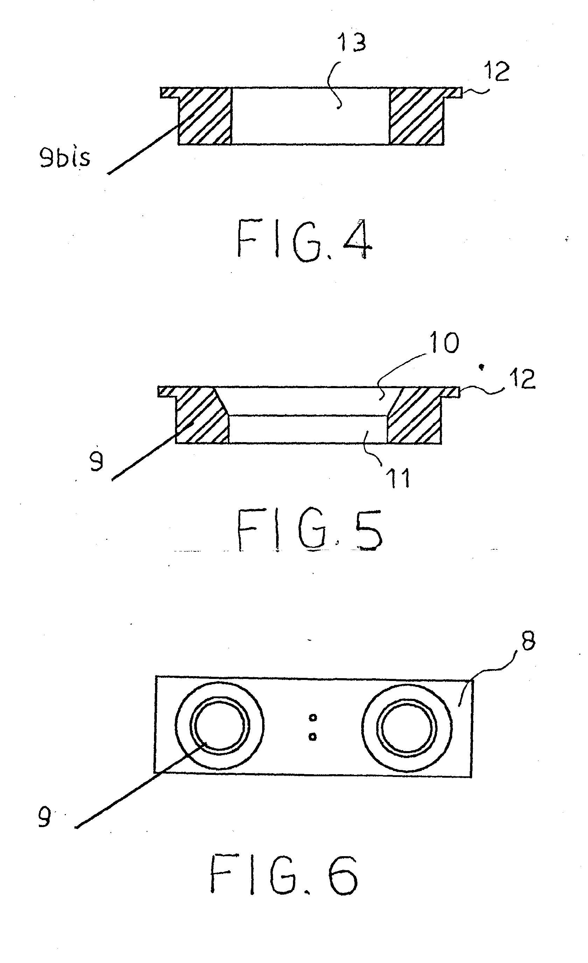

The fig. 4 show in a sight in side section a preferred form of the leaf removing ring according to the present invention;
the fig. 5 shows in a sight in side section another form preferred of the leaf removing ring according to the present invention;
the fig. 6 shows in a sight in plant a plate with two leaf removing rings;
the fig. 7 shows in a schematic sight the general one of a different realization of the complex defogliatore without segments cutter blades ;

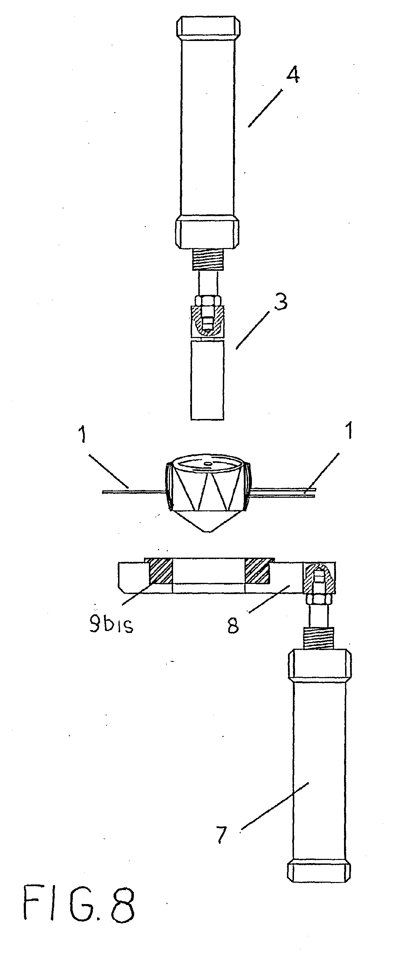

the fig. 8 shows in a schematic lateral sight the artichoke suspended through the vice and the contrasted cylinders, that superior carrying the expulsion device and that inferior the leaf removing ring ;

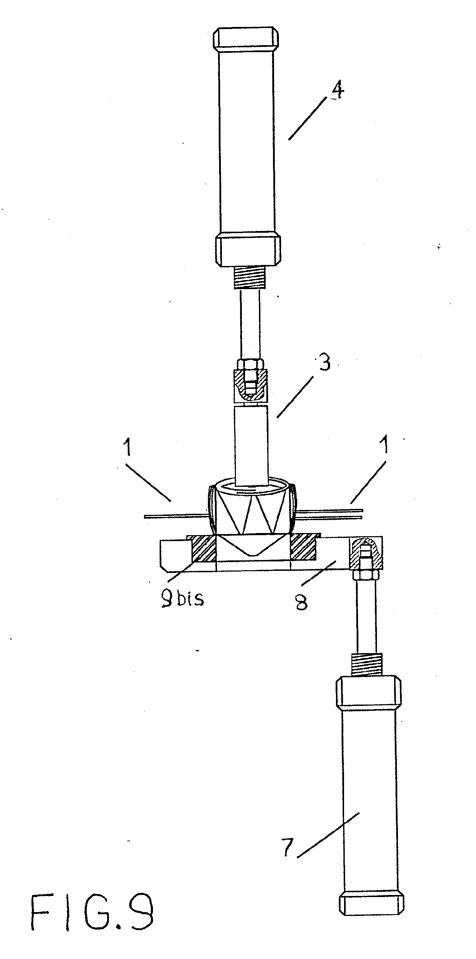

the fig. 9 show in a schematic lateral sight a following phase to the said one of fig. 8;

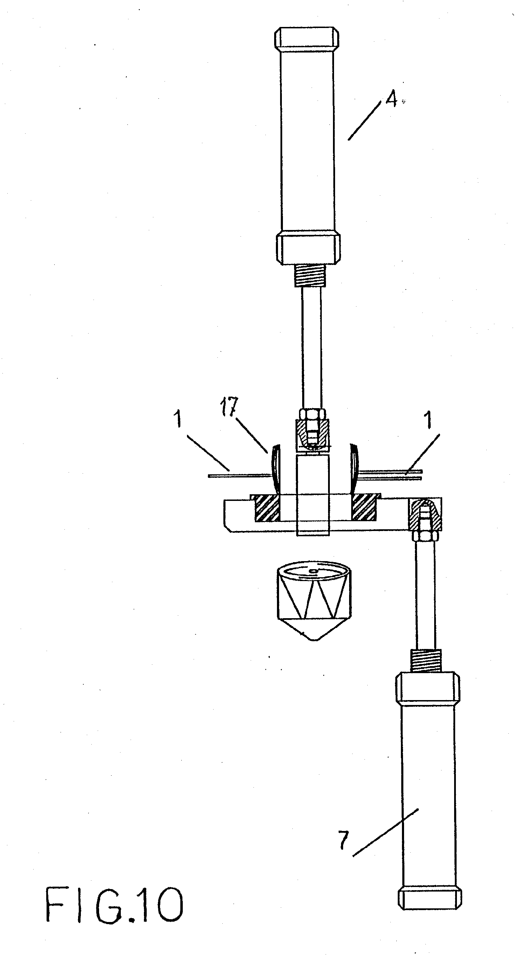

the fig. 10 show in a lateral schematic sight the heart of artichoke, suitably freed from foliage, in gone out of the leaf removing ring.

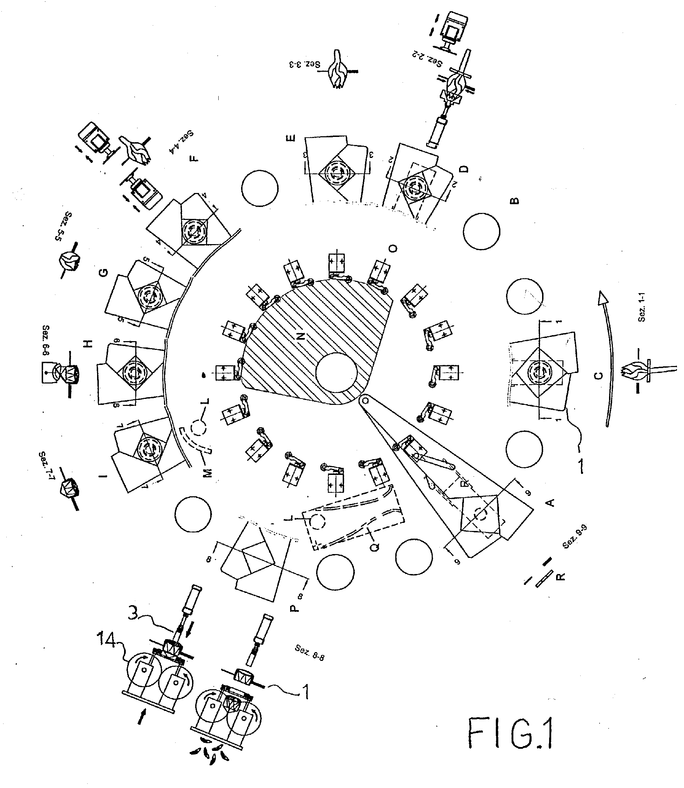

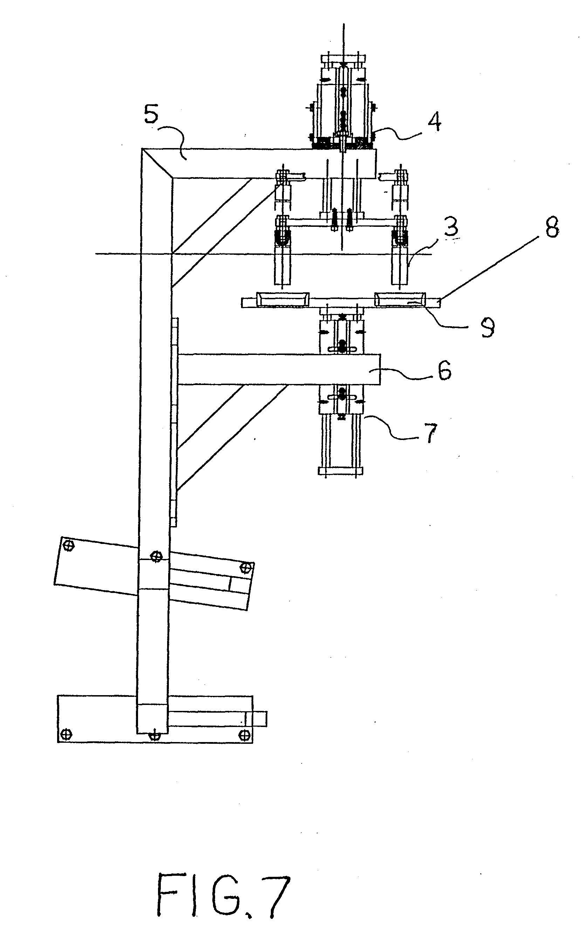

In the fig. 1 it is possible to see all the phases of the process of preparing of the artichokes effected by the machine according to a rotating cycle, particularly they are distinguished the phase Á in which the opening of the vice (1) predisposes in relationship to the gauge of the artichoke to be worked; says opening is predisposed manually operated by the operator with a special flier to mean of the cam Q. The plate of support and centering R positioned under the vice, moves with it up to the position D. In the position "C the artichoke is vertically inserted inside the vice with the stem in the hole of the plaque of centering R, in how much the vice slightly has a greater opening some artichoke for an easy introduction of the same. To the position D the vice stops the artichoke to mean of a pneumatic cylinder commanded by a valve O in turn operated by a cam N. Blocked the artichoke, the plaque of centering R rotates downward to mean of a mechanical guide leaving the inferior part of the artichoke free, position E, allowing so the following phases of preparation. ln the position F to the artichoke the stem and the top are removed through a superior rotating blade and one inferior, both adjustable in height. In the position H happens the last phase of cut. From the lower part it approaches to the artichoke a head rotating knives holder; says head is provided of a tilted knife (to adjustable gradation) that it serves to practise the conicity of the fund of the artichoke and a vertical knife that goes to diametrically determine the heart of the artichoke. Finish the operations of cut it passes to the phase of expulsion. Engraved and well finished up the heart of the artichoke, tightened still among the vices and wound among the leaves, it passes to the position I where the cam N releases the valve O; the cylinder despite is not in tension anymore, it doesn't change his position and accordingly (because of the frictions and inertia of the device) that of the block. Immediately after a cam adjustable M is set according to the diameter of the expulsion device that will go to use, in how much in the case in which the vice was all dam in absence of artichoke it handles to push tumbles or wheel L climbed on under the vice up to the necessary opening for the passage of the expulsion device (such opening would not spontaneously leave however never the vice of the artichoke). This whole part of the trial and the various mechanisms of the machine that intervene have been described more deepening and claimed, as says, in the italian patent applications NA99A000006 and SA2001A000023. Beginning from the position I of the cycle of job, the machine uses of innovations that allow a best quality of the ended product and an economy of the cycle of preparation of the artichoke, In the position I it is installed a visual control system with microcamera (2) able to discriminate possible defects of artichoke base owed to the presence of worms or other parasites. In the position P an expulsion device (3) cylindrical in nylon (perfectly sets in axle to the artichoke) operated by a pneumatic cylinder (4), in turn commanded by a valve, it handles the expulsion of the artichoke from the vice (1). A mechanical driving enlivens, in opposite verse to the direction of the expulsion devices and therefore upward, a rectangular perforated plate (8); within this hole is inserted and fixed through joint a ring especially conformed in rubber material adeguately stiffened with a suitable mixture or with a metal centre. Tells ring in a first form of realization (9) has an internal circular hole with a conical section (10) and a cylindrical section (11) moulded along its thickness and a projecting edge (12) along its circumference that is used for positioning it on the plate (8). In another form preferred of realization said ring (9bis) has an internal cylindrical hole (13) with no conicity. The diameter of aforementioned rings in their simplest and most general shape, may be reduced to simple hollow cylindrical bodies, and varies depending on the final dimensions of the artichoke being processed. Below the vice (1) and on a level in axle with the artichoke, in the machine base, there is a cutter (segment cutter), consisting of one or more circular blades (14), which oppose each other and rotate in opposite directions, capable of vertical movement in association with the plate (8) in order to be positioned 5 mm from the vice (1). The cutter, to according to of the number of segments that is wanted to get, is provided up to six blades. A mobile channel (15) directed by a pneumatic cylinder (16) in partnership and commanded by the system of vision which automatical sends the good and defective artichokes to their respective containers. The function of the innovative unit is as follows: once the artichoke has been shaped and is held firmly in the vice (1) (cycle position I), a visual control system with micro camera (2) makes it possible to inspect the artichoke base and heart for any defects due to the presence of worms or other parasites or even work defects. In cycle position P of work the artichoke must be freed with the pneumatic system of expulsion that a pressure operates on the artichoke to make to shell hit from the zone of vice within one or more containers of harvest of the artichokes, lower down set. The artichokes almost always bring with itself foliage attached and/or hanging from it that must have removed. In order to do this a calibrated device of leaf removing acts , that with a movement in phase contrasted downward to the vertical movement of the device of expulsion it allows the leaves (17) hanging to be removed. In fact the artichoke in his motion of expulsion from the device of vice (1) goes to insert in the hole of the ring (9) or of the ring (9bis) according to the preferred type in use, whose calibrated conformation allows to eliminate the leaves in excess however engraved by the knives. In other words, to cycle of cut and concluded turning, the artichoke be himself jammed in the vice (1), immediately rises up from the base, through a suitably synchronized mechanical action and moves to a perfectly level in axle position just 5 mm below the vice (1) the unit consisting of the lead-removing ring-holder plate (8) and the circular blades (14), that goes to go himself, perfectly in axle to few millimeters, (5 mms.) below the vice (1); at the same time as the plate and circular blades are rising upwards a pneumatic piston (4) it acts from pushing the artichoke out of the vice and progressively using the leaf remover and the segment cutter at the same time. To this point the whole artichoke or cut to segments, to second that the cutter is or less installed on the machine, is sent in the container of the ready good artichokes for the packaging or in the container of the discards, in keeping with the signals coming from the visual control system, which automatical commands, through the pneumatic cylinder (16), the basculamento of the mobile channel of evacuation (15). Is important to specify that the hole in the leaf-removing rings destined to the passage and the cleaning of the artichoke has a diameter slightly greater than that determined by the vertical artichoke cutting knife, and the diameter of the aforementioned rings varies depending on the final dimensions of the artichoke being processed. Such ring has to take the artichoke allowing only the passage of the heart holding back those that were the leaves it engraved from the vertical knife (leaves that must be evacuated as you discard). To facilitate the fall of the crown of leaves from which the heart of the artichoke has been enucleated, the vice is reopened entirely almost to mean of a cam "Q" and not from the cylinder in how much being to double effect is not also used as such, otherwise the reopening could not be varying for the resumption of the cycle of working. A device to brush or to puff of air is anticipated to subsequently facilitate the fall of the leaves on the underlying flowing ribbon of harvest. In another form of realization of the machine, in this motion continuous rotatory case, is anticipated, as in fig. 7, an oscillating arm (5) holding the expulsion devices (3) positioned in pairs, and powered by a pneumatic cylinder (4) in a vertical downwards direction. Opposing this, a projecting beam (6) holds an additional pneumatic cylinder (7) that powers, in an opposite direction to the expulsion devices and therefore upwards, a rectangular plate (18) with two holes corresponding to the axis of each of the expulsion devices, and suitable for carrying two type (9) or (9b) leaf-removing rings; in this case there is no segment cutter.

Says innovation is competitive from the economic point of view because it allows a reduction of the costs of working making to save manpower and it avoids more the use machines to get the same results, besides it is competitive from the functional point of view because it contemporarily allows to realize an exact cleaning of the finished product with the leaving of the residues of working, that is the remainders leaves it engraved some artichoke without damaging the product neither to remove further foliage, to check and to discard artichokes defective affections from parasites and to get segments of artichokes perfectly conformed according to the industrial specific and already ready for the packaging.

From how much previously described and illustrated can be seen that the invention reaches the preceded purposes.

## Claims

1. Rotating machine for preparing artichokes for packaging **characterized by** the fact that it combines cutting and turning devices with a special unit, consisting of a perforated plate, bearing one or more moulded and calibrated rings (9) or (9b), possibly associated with opposing circular blades (14) that rotate in opposite directions, against the direction of the artichoke expulsion, as well as a visual control device connected to an unloading direction mechanism consisting of a mobile channel (15) directed by a pneumatic cylinder (16).

2. Rotating machine for preparing artichokes for packaging as in claim 1) **characterized by** the fact that the ring (9) in rubber material stiffened with a suitable mixture or with a metal centre, has an internal circular hole with a conical section (10) and a cylindrical section (11) moulded along its thickness and a projecting edge (12) along its circumference that is used for positioning it on the plate (8).

3. Rotating machine for preparing artichokes for packaging as in claims 1) and 2) **characterized by** the fact that the ring (9b) has an internal cylindrical hole (13) with no conicity.

4. Rotating machine for preparing artichokes for packaging as in claims 1), 2) and 3) **characterized by** the fact that the hole in the leaf-removing rings has a diameter slightly greater than that determined by the vertical artichoke cutting knife, and the diameter of the aforementioned rings varies depending on the final dimensions of the artichoke being processed.

5. Rotating machine for preparing artichokes for packaging as in claim 1) **characterized by** the fact that the leaf-removing rings in pairs or installed individually, in their simplest and most general shape, may be reduced to simple hollow cylindrical bodies.

6. Rotating machine for preparing artichokes for packaging as in claim 1) **characterized by** the fact that, below the vice (1) and on a level with the artichoke, in the machine base, there is a cutter (segment cutter), consisting of one or more circular blades (14), up to six, which oppose each other and rotate in opposite directions, capable of vertical movement in association with the plate (8) in order to be positioned 5 mm from the vice (1).

7. Rotating machine for preparing artichokes for packaging as in claim 1) **characterized by** the fact that a visual control system with a micro camera (2) is installed which is able to detect any defects in the artichoke due to the presence of worms or other parasites, and automatically sends command signals to an unloading direction mechanism consisting of a mobile channel (15) directed by a pneumatic cylinder (16), which sends the good and defective artichokes to their respective containers.

8. Rotating machine for preparing artichokes for packaging as in one or more of the previous claims **characterized by** the fact that the function of the innovative unit is as follows: once the artichoke has been shaped and is held firmly in the vice (1) (cycle position 1), a visual control system with micro camera (2) makes it possible to inspect the artichoke base and heart for any defects due to the presence of worms or other parasites or even work defects; then (cycle position p) the artichoke is freed from any seeds and forage attached and/or hanging from it and may be cut into segments - in order to do this the unit consisting of the lead-removing ring-holder plate (8) and the circular blades immediately rises up from the base, through a suitably synchronized mechanical action and moves to a perfectly level position just 5 mm below the vice (1); at the same time as the plate and circular blades are rising upwards, a pneumatic piston (4) works from above with the expulsion device (3), pushing the artichoke out of the vice and progressively using the leaf remover and the segment cutter at the same time, so that the artichoke is perfectly cleaned and cut and - good or bad as it may be - is sent to the mobile channel (15) directed by a pneumatic cylinder (16) to the respective collection container, in keeping with the signals coming from the visual control system.

9. Rotating machine for preparing artichokes for packaging as in claims 1), 6), 7) and 8) **characterized by** the fact that the circular blade segment cutter (14), or the visual control system with video camera (2), or both, may not be installed, and, if the visual control system is lacking, the evacuation channel is fixed, not horizontally pivoted.

10. Rotating machine for preparing artichokes for packaging as in one or more of the previous claims **characterized by** an oscillating arm (5) holding the expulsion devices (3) positioned in pairs, and powered by a pneumatic cylinder (4) in a vertical downwards direction; opposing this, a projecting beam (6) holds an additional pneumatic cylinder (7) that powers, in an opposite direction to the expulsion devices and therefore upwards, a rectangular plate (18) with two holes corresponding to the axis of each of the expulsion devices and suitable for carrying two type (9) or (9b) leaf-removing rings; in this case there is no segment cutter.
